# EUROPEAN PATENT APPLICATION

(11) **EP 3 069 775 A1**
(43) Date of publication of application: **21.09.2016**
(21) Application number: 16161111.6
(22) Date of filing: 18.03.2016
(51) Int. Cl.: B01D 46/00, B64D 37/32

(54) **SCALABLE AIR FILTER CONFIGURATION FOR FUEL TANK INERTING SYSTEM**

(30) Priority: 20.03.2015 US 201514663605
(71) Applicant: Hamilton Sundstrand Corporation, Windsor Locks, CT 06096-1010 (US)
(72) Inventor: D'ORLANDO, Paul, Simsbury, CT 06070 (US); DEVALVE, Timothy D., Manchester, CT 06040 (US)
(74) Representative: Bridge, Kerry Ann

(57) **Abstract**

An aircraft fuel tank inerting system 10 includes a filter apparatus 20 and an air separation module configured to separate oxygen from a fluid stream. The filter apparatus includes a housing unit 18 with a fluid inlet port 14 configured to receive a first fluid stream 12, a fluid outlet port 26 configured to deliver a second fluid stream 24, and a plurality of filter cartridges 22. Each of the plurality of filter cartridges 22 is substantially the same and positioned within the housing unit 18. The air separation module is in fluid communication with the filter apparatus.

## Description

### BACKGROUND

The present invention relates to fuel tank inerting systems, and more particularly to a filter apparatus of an aircraft fuel tank inerting system.

Fuel tank inerting systems are used to reduce the risk of fire or fuel tank explosions. Fuel tank inerting systems use air separation modules (ASMs) to separate oxygen from a fluid stream, such as ambient air, to generate an inert, nitrogen-enriched, stream of fluid that can be delivered to the fuel tanks to replace the air/fuel mixture that exists above the liquid fuel. Prior to entering the ASM, the fluid stream is filtered through an air filter to remove impurities that could reduce the effectiveness of the ASM, such as particulate matter and oil. On-board aircraft fuel tank inerting systems, generally referred to as On-Board Inert Gas Generating Systems (OBIGGS), may also require converting ozone, which is present in the upper atmosphere. A single air filter may be used to filter all impurities as well as convert ozone to oxygen.

Different aircrafts may require fuel tank inerting systems of varying capacities depending on the size of the fuel tank. For systems with greater demand, the quantity of ASMs is simply increased, while the size of each ASM remains the same. In contrast, the number of air filters is not increased in accordance with the number of ASMs. Instead, air filters are sized to accommodate the total demand of the system. Because fuel tank inerting systems of varying capacities require varying sizes of air filters, the air filters are not interchangeable from one system to another and must be uniquely designed for each system.

### SUMMARY

In one aspect, an aircraft fuel tank inerting system includes a filter apparatus and an air separation module configured to separate oxygen from a fluid stream. The filter apparatus includes a housing unit with a fluid inlet port configured to receive a first fluid stream, a fluid outlet port configured to deliver a second fluid stream, and a plurality of filter cartridges. Each of the plurality of filter cartridges is substantially the same and positioned within the housing unit. The air separation module is in fluid communication with the filter apparatus.

In another aspect, a method of assembly and use of a filter apparatus for an aircraft fuel tank inerting system includes the steps of stacking a plurality of filter cartridges in a housing unit, sealing a gap between an adjacent pair of filters, injecting a first fluid stream into the common fluid shaft or common fluid reservoir, collecting a portion of the first fluid stream having been filtered by at least one of the plurality of filter cartridges, and delivering the filtered fluid stream through an outlet port on the housing unit to an air separation module. The filters are stacked in a row such that open central cavities of each of the plurality of filter cartridges are aligned to create a common fluid shaft. The plurality of filters are also spaced apart from an inner housing wall to create a common fluid reservoir. Sealing the gap between an adjacent pair of filters maintains the common fluid shaft and the common fluid reservoir.

In yet another aspect, an aircraft fuel tank inerting system includes a filter apparatus and an air separation module in fluid communication with the filter apparatus and configured to separate oxygen from a fluid stream. The filter apparatus includes a housing unit with a fluid inlet port configured to receive a first fluid stream and a fluid outlet port configured to deliver a second fluid stream to the air separation module, a filter having an open central cavity in direct fluid communication with either the fluid inlet port or the fluid outlet, a non-filtering element with a height substantially the same as a height of the filter, and a reservoir surrounding an outer perimeter of the filter and in direct fluid communication with the fluid inlet port or fluid outlet port not in direct fluid communication with the common fluid shaft. The filter and the non-filtering element are stacked together within the housing unit.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a perspective view of one embodiment of a filter apparatus and air separation module assembly of a fuel tank inerting system of an aircraft.
FIG. 2 is a cross-sectional view of the embodiment of the filter apparatus taken along line 2-2 of FIG. 1.
FIG. 3 is a quarter sectional perspective view of a stackable filter cartridge of the type used in the filter apparatus.
FIG. 4 is a schematic view of another embodiment of a filter apparatus and air separation module assembly of the fuel tank inerting system.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

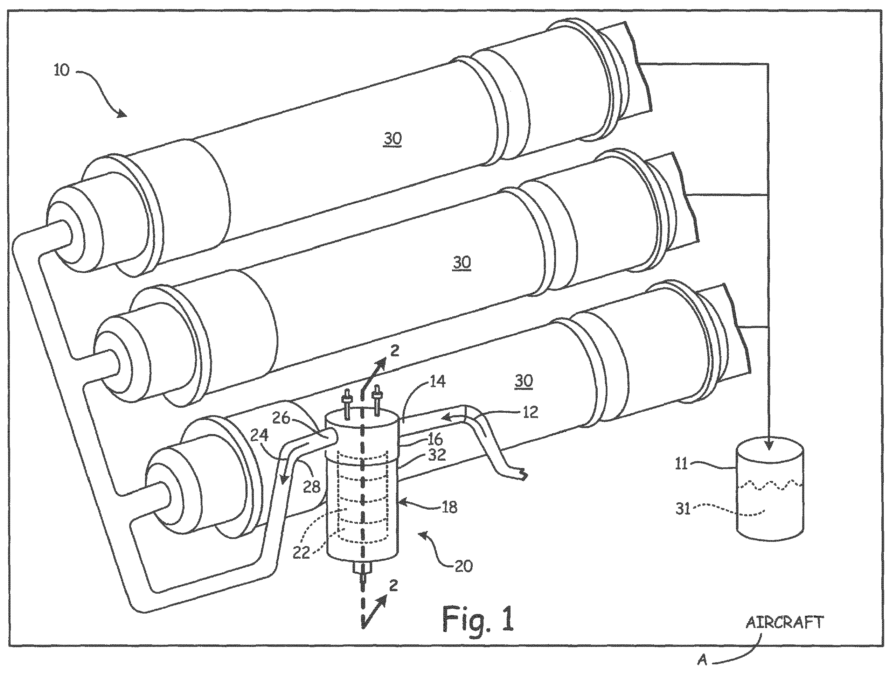

FIG. 1 is a perspective view of one embodiment of a fuel tank inerting system 10 for delivering nitrogen-enriched air to a fuel tank 11 of an aircraft A. A fluid stream 12, generally consisting of pressurized air, which can include cooled bleed air from a core or bypass fluid stream in a gas turbine engine (not shown), enters a fluid inlet port 14, which can be located on a header 16 of a housing unit 18 of a filter apparatus 20. The fluid stream 12 passes through at least one of a plurality of filter cartridges 22 (shown in phantom) within the housing unit 18 to remove undesired material such as particulate matter and oil, and/or convert ozone (O₃) to oxygen (O₂). The filtered fluid stream 24 then passes through a fluid outlet port 26 on the housing unit 18 and through a passive manifold 28 to one or more air separation modules (ASMs) 30, which remove oxygen from the filtered fluid stream 24. A resulting nitrogen-enriched fluid stream is directed from the ASMs 30 to the fuel tank 11 to replace an air-fuel mixture above a liquid fuel 31 in the fuel tank 11. While the present invention relates to an aircraft fuel tank inerting system 10 or OBIGGS, it will be understood by one skilled in the art that use of the present invention is not limited to on-board aerospace applications but may be used in on-ground or industrial applications, as well as with other vehicular applications.

The housing unit 18 in the illustrated embodiment holds a plurality of filter cartridges 22 (shown in phantom) to accommodate the multiple ASMs 30. The housing consists of two pieces-the header 16, through which the fluid inlet port 14 and fluid outlet port 26 are positioned, and a lower bowl 32, which holds the plurality of filter cartridges 22. The header 16 and lower bowl 32 can be secured together with a threaded connection, a v-band clamp, or other suitable fastening mechanism capable of creating an airtight seal to prevent fluid from leaking out of the filter apparatus 20. The housing unit 18 can be made of aluminum or an aluminum alloy. Alternatively, the housing unit 18 can be made of steel or similar material suited to high-temperature environments or can be made of plastic. It will be understood by one skilled in the art that the material used for manufacture of the housing unit 18 will depend on the environment in which it is operating.

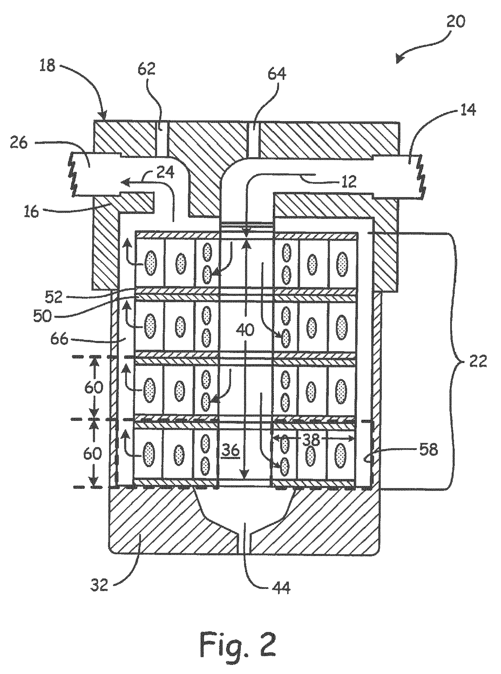

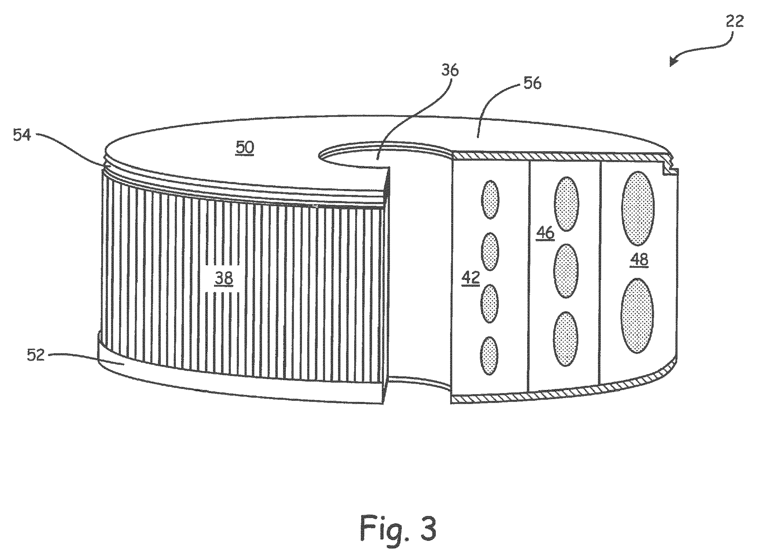

FIG. 2 is a schematic cross-sectional view of the embodiment of the filter apparatus 20 taken along line 2-2 of FIG. 1. FIG. 3 is perspective view of one filter cartridge 22 of the filter apparatus 20 shown in isolation. Each of the plurality of filter cartridges 22 has an open central cavity 36 and a filter body 38 that extends from an outer perimeter of the open central cavity 36 to an outer perimeter of the filter cartridge 22. The plurality of filter cartridges 22 are stacked such that the open central cavity 36 of each of the plurality of filter cartridges 22 are aligned to form a common fluid shaft 40. In one embodiment, the fluid stream 12 enters the filter apparatus 20 though the fluid inlet port 14 in the header 16 of the housing unit 18 and is directed to the common fluid shaft 40. From the common fluid shaft 40, the fluid stream 12 enters the plurality of filter cartridges 22 at the filter body 38 adjacent the open central cavities 36, such that at least a portion of the fluid stream 12 enters each of the plurality of filter cartridges 22.

Each of the plurality of filter cartridges 22 can have multiple membranes 42, 46, 48 configured to remove different impurities or unwanted components of the fluid stream. Each of the plurality of filter cartridges 22 in FIG. 2 have three membranes, however, it will be understood by one skilled in the art that the number of membranes can be varied based on the number of impurities the system requires be removed and that a single membrane can be configured to remove multiple impurities or be tailored for removal of a particular type of impurity. The terms "filter" and "filter membrane" are used to generally describe a broad range of materials that can be used to remove particular components of the fluid stream. These terms do not limit the present invention to those materials customarily recognized as "filters," but as described below can include separators, coalescers, and catalytic converters, among other materials not described herein capable of removing a particular component of the fluid stream.

The impurities removed by the filter apparatus 20 include at least one of particulate matter, oil, and ozone. Ozone is of particular concern in the design of filters for on-board aircraft fuel tank inerting systems because ozone is present in the ambient air of the upper atmosphere. Ozone may not be of concern in the design of filters for use in on-ground fuel tank inerting systems. FIG. 2 shows an innermost first membrane 42, which can be coalescer, designed to remove oil and water from the fluid stream 12. The separated oil and water can collect at the bottom of the housing unit 18 and be removed through a liquid drain 44. The first inner membrane 42 is surrounded by a second membrane 46, which can be a catalytic ozone converter designed to convert ozone to oxygen. An outermost third membrane 48 can be a HEPA filter designed to remove particulate matter. The third membrane 48 surrounds the second membrane 46 and can be the final membrane through which the fluid stream 12 passes.

The liquid drain 44 shown in FIG. 2 is configured to collect and drain oil and water separated from the first membrane 42. The liquid drain 44 may not be necessary in filter apparatuses 20 that do not separate liquid components from the fluid stream 12. It will be understood by one skilled in the art that the filter apparatus 20 can be designed to exclude the liquid drain 44 where there is no need or alternatively, modify the configuration or positioning of the liquid drain 44 to accommodate different filter cartridge designs.

As shown in FIG. 3, each of the plurality of filter cartridges 22 has a pair of top and bottom end caps 50, 52, which cover and seal the top and bottom of the filter body 38, respectively, to prevent fluid from escaping the filter body 38 prematurely or before passing through the third membrane 48. End caps 50, 52 can include drainage holes or slots (not shown) positioned above and below the first membrane 42 (coalescer) to allow oil and water to drain through the plurality of filter cartridges 22 to the liquid drain 44 at the bottom of the housing unit 18. Alternatively, end caps 50, 52 can be of solid construction and oil and water can drain through the common fluid shaft 40 to the liquid drain 44 at the bottom of the housing unit 18.

Each end cap 50, 52 is configured to detachably mate with an adjacent end cap 50, 52, such that the top end cap 50 of one filter can be removably secured to the bottom end cap 52 of an adjacent filter in the stack. Adjacent end caps 50, 52 form a sealed connection to prevent fluid from passing through a gap between two adjacent filter cartridges 22. The end caps 50, 52 can be made of a hard material, such as an aluminum alloy, or other material suited to the environment and capable of forming a seal with an adjacent end cap 50, 52. The filter cartridge 22 shown in the embodiment of FIG. 3 has a top end cap 50 with a first and second threaded seal 54, 56 located on the outer and inner diameter of the filter cartridge 22, respectively. The first threaded seal 54 is a male connector, which can be connected to the matching female threaded connector of an adjacent bottom end cap 52. The second threaded seal 56 is a female connector, which can be connected to the matching male threaded connector of the adjacent bottom end cap 52. While FIG. 3 shows a threaded seal 54, 56, it will be understood by one skilled in the art that many suitable mechanisms for removably securing adjacent end caps 50, 52 are available and the present invention is not limited to the embodiment shown. Alternative securing mechanisms can include, but are not limited to, slot and grove-style locks and separate adapters configured to join adjacent filter cartridges 22. In another embodiment, adjacent filter cartridges 22 are not attached to one another, but pressure fit together upon closure of the housing unit 18. O-rings, washers, or similar seals can also be included to further block fluid flow between adjacent end caps 50, 52.

The threaded seals 54, 56 or similar attachment and sealing mechanisms of the top and bottom end caps 50, 52 also connect with the fluid inlet port 14 in the header 16 of the housing unit 18 and the lower bowl 32 of the housing unit 18, respectively, to prevent fluid from bypassing the plurality of filter cartridges 22. Each of the plurality of filter cartridges 22 are substantially the same with regard to structure, dimensions, and composition, and therefore, are interchangeable. Each of the plurality of filter cartridges 22 can attach to another filter cartridge 22 or to the header 16 or lower bowl 32 of the housing unit 18. In addition, any single filter cartridge 22 can be replaced without replacing the remaining filter cartridges 22.

FIG. 2 shows a filter apparatus 20 holding four filter cartridges 22, however, it will be understood by one skilled in the art that the housing unit 18 can be designed to hold any number of filter cartridges 22 based on the demand of the fuel tank inerting system 10. Alternatively, any of the plurality of filter cartridges 22 can be replaced by a non-filtering element 58. In one embodiment, a non-filtering element 58 is placed at the bottom of the housing unit 18 in place of one of the plurality of filter cartridges 22 (shown in phantom). The non-filtering element 58 has a height 60 that is substantially the same for each of the plurality of filter cartridges 22, threaded seals 54, 56, and an open central cavity 36, such that it is easily interchangeable with any of the plurality of filter cartridges 22. In one embodiment, the outer perimeter of the non-filtering element 58 matches the outer perimeter of each of the plurality of filter cartridges 22. In another embodiment, the outer perimeter of the non-filtering element 58 is configured to abut an inner surface of the housing unit 18 (shown in phantom). The non-filtering element 58 can be used to accommodate fuel tank inerting systems with varying demand or systems with lower demand without replacing the housing unit 18. In this way, a single housing unit 18 design can accommodate multiple systems of varying capacity.

In one embodiment, the fluid stream 12 enters the filter membrane 42, 46, 48 through the common fluid shaft 40. Once the fluid stream 12 has passed through the filter membrane 42, 46, 48, it is collected in a reservoir 66 that surrounds the outer perimeter of the plurality of filter cartridges 22. The reservoir 66 is in direct fluid communication with the fluid outlet port 26 on the housing unit 18. The filtered fluid stream 24 exits the housing unit 18 through the fluid outlet port 26 and enters a passive manifold 28 where it is directed to one or more ASMs 30. Both the fluid outlet port 26 and fluid inlet port 14 are equipped with pressure relief valves 62, 64, which can release fluid if the fluid pressure exceeds a predetermined value.

Although in the embodiments discussed and shown, the fluid inlet port 14 is in direct fluid communication with the common fluid shaft 40 and the fluid outlet port 26 is in direct communication with the reservoir 66. It will be understood by one skilled in the art that the fluid flow path can be reversed. In other words, the fluid inlet port 14 and fluid outlet port 26 can be interchanged, such that the fluid outlet port 26 is connected with the unfiltered fluid stream 12 and the fluid inlet port 14 is connected to the one or more ASMs 30. In this construction, the fluid stream 12 is directed to the reservoir 66 and enters the filter body 38 from the outermost perimeter of the filter cartridge 22. The filtered fluid stream 24 exits into the common fluid shaft 40 from which it is directed to the one or more ASMs 30. It will further be understood by one skilled in the art that the sequence of filter membranes 42, 46, 48 can be changed to best accommodate fluid flow in this direction.

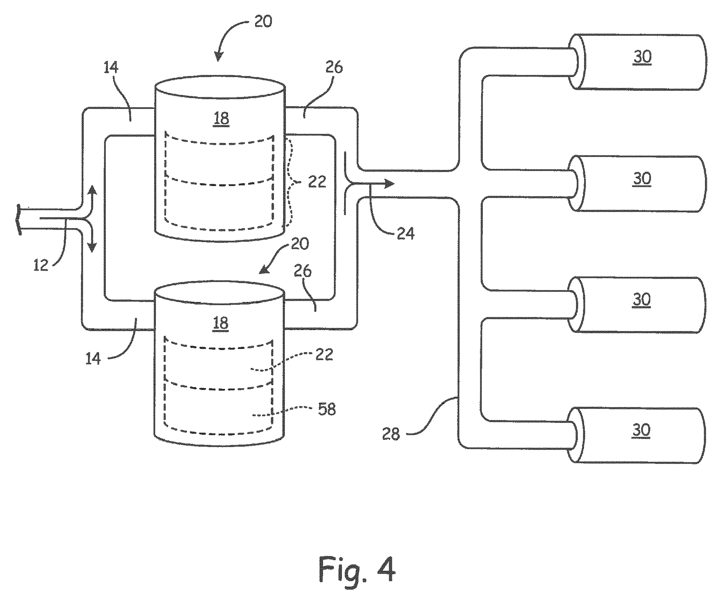

FIG. 4 is a schematic view of another embodiment of a filter apparatus 20 and air separation module assembly of the fuel tank inerting system 10. FIG. 4 shows a fuel tank inerting system 10 having two filter apparatuses 20, each having the capacity to hold multiple (e.g., two filter cartridges) 22 (shown in phantom). The fluid stream 12 is divided such that substantially equal volumes of fluid are directed to each filter apparatus 20. The filter apparatuses 20 are configured to function in substantially the same manner as the filter apparatus 20 shown in FIGS. 1-2. The filtered fluid stream 24 exits each filter apparatus 20 into a passive manifold 28 where it is directed to one or more ASMs 30. In one embodiment, the filtered fluid stream 24 from each filter apparatus 20 is combined upstream of the ASMs 30. Alternatively, the filtered fluid streams 22 can be kept separate.

In one embodiment, a non-filtering element 58 replaces a filter cartridge 22 in the filter apparatus 20, such that the filter apparatus 20 contains one filter cartridge 22 and one non-filtering element 58 (both shown in phantom). It will be understood by one skilled in the art that the number of filter cartridges 22 each filter apparatus 20 holds is limited by the size of the housing unit 18 and that the housing unit 18 can be designed to hold more or less filter cartridges 22 to accommodate the demand of the fuel tank inerting system 10.

### Discussion of Possible Embodiments

The following are non-exclusive descriptions of possible embodiments of the present invention.

A fuel tank inerting system includes a filter apparatus and an air separation module. The filter apparatus has a housing unit with a fluid inlet port configured to receive a first fluid stream, a fluid outlet port configured to deliver a second fluid stream, and a plurality of filter cartridges, which are substantially the same and are positioned within the housing unit. The air separation module is in fluid communication with the filter apparatus and configured to separate oxygen from the second fluid stream.

The fuel tank inerting system of the preceding paragraph can optionally include, additionally and/or alternatively, any one or more of the following features, configurations and/or additional components:

A further embodiment of the foregoing fuel tank inerting system, wherein each of the plurality of filter cartridges has a height less than a height of the housing unit and the plurality of filter cartridges has a total height less than the height of the housing unit.

A further embodiment of the foregoing fuel tank inerting system, wherein each of the plurality of filter cartridges is a cylinder with an open central cavity extending along a length of the cylinder and a filter membrane extending from a perimeter of the open central cavity to an outermost diameter of the filter cartridge.

A further embodiment of the foregoing fuel tank inerting system, wherein the plurality of filter cartridges are stacked in a row such that the open central cavities of each of the plurality of filter cartridges are aligned to create a common fluid shaft in direct fluid communication with one of the fluid inlet port or fluid outlet port.

A further embodiment of the foregoing fuel tank inerting system, wherein each of the plurality of filter cartridges has a first and second sealing member and, wherein the first sealing member is configured to mate with the second sealing member of an adjacent filter cartridge and prevent the first fluid stream from entering a gap between adjacent filter cartridges while maintaining the common fluid shaft.

A further embodiment of the foregoing fuel tank inerting system, wherein a top portion of the housing unit is configured to mate with the first sealing member and prevent the first fluid stream from entering a gap between an uppermost filter cartridge and said top portion of the housing unit, and wherein a base of the housing unit is configured to mate with the second sealing member to prevent the first fluid stream from entering a gap between a lowermost filter cartridge and the base of the housing unit.

A further embodiment of the foregoing fuel tank inerting system having a liquid drain positioned at a lowermost end of the housing unit below the plurality of filter cartridges.

A further embodiment of the foregoing fuel tank inerting system, wherein the plurality of filter cartridges are each configured to remove at least one of the group consisting of particulate matter, ozone, and oil from the first fluid stream.

A further embodiment of the foregoing fuel tank inerting system having a reservoir, which surrounds an outermost diameter of the plurality of filter cartridges.

A further embodiment of the foregoing fuel tank inerting system, wherein the reservoir is in direct fluid communication with the one of the inlet port or outlet port not in direct fluid communication with the common fluid shaft.

A further embodiment of the foregoing fuel tank inerting system having a non-filtering element, wherein the non-filtering element has a height substantially the same as a height of each of the plurality of filter cartridges and wherein the non-filtering element is positioned in the housing unit in place of one of the plurality of filter cartridges.

A further embodiment of the foregoing fuel tank inerting system, wherein the second fluid stream comprises a portion of the first fluid stream having been filtered by at least one of the plurality of filter cartridges.

A method of assembly and use of a filter apparatus for a fuel tank inerting system, includes the steps of: stacking a plurality of filter cartridges in a housing unit, wherein the plurality of filter cartridges are stacked in a row such that open central cavities of each of the plurality of filter cartridges are aligned to create a common fluid shaft and are spaced apart from an inner housing wall to create a common fluid reservoir; sealing a gap between an adjacent pair of filters while maintaining the common fluid shaft and the common fluid reservoir; injecting a first fluid stream into the common fluid shaft; collecting a second fluid stream, wherein the second fluid stream comprises a portion of the first fluid stream having been filtered by at least one of the plurality of filter cartridges; and delivering the second fluid stream through an outlet port on the housing unit to an air separation module.

A further embodiment of the foregoing method of assembly and use of a filter apparatus including the step of stacking an additional filter in the housing unit based on a quantity of air separators receiving the second fluid stream.

A further embodiment of the foregoing method of assembly and use of a filter apparatus including the step of stacking a non-filtering element with the plurality of filter cartridges in the housing unit, wherein the non-filtering element has a height substantially the same as a height of each of the plurality of filter cartridges.

An aircraft fuel tank inerting system includes a filter apparatus and an air separation module. The filter apparatus has a housing unit with a fluid inlet port configured to receive a first fluid stream and a fluid outlet port configured to deliver a second fluid stream; a filter having an open central cavity in direct fluid communication with one of the fluid inlet port or fluid outlet port; a non-filtering element with a height substantially the same as a height of the filter; and a reservoir surrounding an outer perimeter of the filter and in direct fluid communication with the one of the fluid inlet port or fluid outlet port not in direct fluid communication with the open central cavity. The filter and the non-filtering element are stacked together within the housing unit. The air separation module is in fluid communication with the filter apparatus and configured to separate oxygen from the second fluid stream.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, alignment or shape variations induced by thermal, rotational or vibrational operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fuel tank inerting system (10) comprising:
a filter apparatus (20) comprising:
a housing unit (18) with a fluid inlet port (14) configured to receive a first fluid stream (12) and a fluid outlet port (26) configured to deliver a second fluid stream (24); and
a plurality of filter cartridges (22), wherein each of the plurality of filter cartridges is substantially the same and is positioned within the housing unit; and
an air separation module in fluid communication with the filter apparatus and configured to separate oxygen from the second fluid stream.

2. The fuel tank inerting system of claim 1, wherein each of the plurality of filter cartridges (22) has a height less than a height of the housing unit (18) and the plurality of filter cartridges (22) has a total height less than the height of the housing unit.

3. The fuel tank inerting system of claim 1 or 2, wherein each of the plurality of filter cartridges (22) is a cylinder with an open central cavity (36) extending along a length of the cylinder and a filter membrane (42, 46, 48) extending from a perimeter of the open central cavity (36) to an outermost diameter of the filter cartridge.

4. The fuel tank inerting system of claim 3, wherein the plurality of filter cartridges are stacked in a row such that the open central cavities (36) of each of the plurality of filter cartridges (22) are aligned to create a common fluid shaft in direct fluid communication with one of the fluid inlet port (14) or fluid outlet port (26).

5. The fuel tank inerting system of claim 4, wherein each of the plurality of filter cartridges (22) has a first and second sealing member and, wherein the first sealing member (54) is configured to mate with the second sealing member (56) of an adjacent filter cartridge (22) and prevent the first fluid stream from entering a gap between adjacent filter cartridges while maintaining the common fluid shaft.

6. The fuel tank inerting system of claim 5, wherein a top portion of the housing unit (18) is configured to mate with the first sealing member (54) and prevent the first fluid stream from entering a gap between an uppermost filter cartridge and said top portion of the housing unit (18), and wherein a base of the housing unit is configured to mate with the second sealing member (56) to prevent the first fluid stream from entering a gap between a lowermost filter cartridge and the base of the housing unit.

7. The fuel tank inerting system of claim 4, further comprising:
a liquid drain (44) positioned at a lowermost end of the housing unit (18) below the plurality of filter cartridges (22).

8. The fuel tank inerting system of any preceding claim, wherein the plurality of filter cartridges (22) are each configured to remove at least one of the group consisting of particulate matter, ozone, and oil from the first fluid stream.

9. The fuel tank inerting system of claim 4, further comprising a reservoir (66), which surrounds an outermost diameter of the plurality of filter cartridges (22).

10. The fuel tank inerting system of claim 9, wherein the reservoir (66) is in direct fluid communication with the one of the inlet port (14) or outlet port (26) not in direct fluid communication with the common fluid shaft.

11. The fuel tank inerting system of any preceding claim, further comprising a non-filtering element, wherein the non-filtering element has a height substantially the same as a height of each of the plurality of filter cartridges (22) and wherein the non-filtering element (58) is positioned in the housing unit in place of one of the plurality of filter cartridges.

12. The fuel tank inerting system of any preceding claim, wherein the second fluid stream (24) comprises a portion of the first fluid stream having been filtered by at least one of the plurality of filter cartridges.

13. A method of assembly and use of a filter apparatus for a fuel tank inerting system (10), the method comprising the steps of:
stacking a plurality of filter cartridges (22) in a housing unit (18), wherein the plurality of filter cartridges (22) are stacked in a row such that open central cavities (36) of each of the plurality of filter cartridges (22) are aligned to create a common fluid shaft and are spaced apart from an inner housing wall to create a common fluid reservoir (66);
sealing a gap between an adjacent pair of filters while maintaining the common fluid shaft and the common fluid reservoir (66);
injecting a first fluid stream (12) into one of the common fluid shaft or common fluid reservoir (66);
collecting a second fluid stream (24), wherein the second fluid stream comprises a portion of the first fluid stream (12) having been filtered by at least one of the plurality of filter cartridges; and
delivering the second fluid stream (24) through an outlet port (26) on the housing unit (18) to an air separation module.

14. The method of claim 13, further comprising:
stacking an additional filter in the housing unit (18) based on a quantity of air separators receiving the second fluid stream (24).

15. The method claim of 13, further comprising:
stacking a non-filtering element (58) with the plurality of filter cartridges (22) in the housing unit (18), wherein the non-filtering element (58) has a height substantially the same as a height of each of the plurality of filter cartridges (22).
